# EUROPÄISCHE PATENTSCHRIFT

(11) **EP 0 450 725 B1**
(45) Veröffentlichungstag und Bekanntmachung des Hinweises auf die Patenterteilung: **13.09.1995**
(21) Anmeldenummer: 91200756.4
(22) Anmeldetag: 29.03.1991
(51) Int. Cl.: H04L 12/56

(54) **Asynchrones Zeitvielfachübermittlungssystem mit einem Koppelfeld**
Asynchronous time division multiplex system with a switching network
Système à multiplexage temporel asynchrone avec un réseau de commutation

(30) Priorität: 02.04.1990 DE 4010535
(43) Veröffentlichungstag der Anmeldung: 09.10.1991
(73) Patentinhaber: Philips Patentverwaltung GmbH, 22335 Hamburg (DE); Philips Electronics N.V., 5621 BA Eindhoven (NL)
(72) Erfinder: Kowalk, Wolfgang, Dr., W-2900 Oldenburg (DE); Keller, Hans-Georg, W-5100 Aachen (DE)
(74) Vertreter: Peuckert, Hermann, Dipl.-Ing.

(56) Entgegenhaltungen:
- EP-A- 0 256 702
- EP-A- 0 351 014
- WO-A-85/04776
- IEEE JOURNAL ON SELECTED AREAS IN COMMUNICATIONS, Band SAC-5, Nr. 8, Oktober 1987, Seite 1284-1292, New York, US; S. NOJIMA et al.: "Integrated services packet network using bus matrix switch"
- IEEE JOURNAL ON SELECTED AREAS IN COMMUNICATIONS, Band 7, Nr. 7, September1989, Seiten 1091-1103, New York, US; H. AHMADI et al.: "A survey of modern high-performance switching techniques"

## Beschreibung

Die Erfindung bezieht sich auf ein asynchrones Zeitvielfachübermittlungssystem mit einem Koppelelement,
- das von Zubringerleitungen gelieferte, für eine Abnehmerleitung bestimmte Zellen überträgt und
- das mit jeweils einer Zubringerleitung gekoppelte . Zellenfilter enthält, welche bei Zuordnung der in den Zellen enthaltenen Wegekennung zu der Abnehmerleitung die Zellen zur Speicherung in mit jedem Zellenfilter gekoppelte Kreuzungspuffer durchlassen, welche die Zellen mit einer vorgegebenen Element-Übertragungsrate erhalten.

Bei dem asynchronen Zeitvielfachübermittlungssystem werden Nutzinformationen, z.B. Fernsprech-, Bild- oder Tonsignale, in Blöcken fester Länge über Anordnungen zur digitalen Signalverarbeitung gesendet. Als ein Block fester Länge wird eine Zelle bezeichnet, die eine vorbestimmte Anzahl von Bits in serieller Reihenfolge aufweist. Jede Zelle besteht aus einem Kopf- und einem Informationsfeld. In dem Kopffeld ist unter anderem die Wegekennung für die Zelle untergebracht. Unter einer Wegekennung ist eine Verbindungskennung oder eine Wegelenkungsinformation zu verstehen. In der Verbindungskennung ist die Angabe über das Ziel bzw. Teilziel der Nutzinformation enthalten. Die Wegelenkungsinformation wird innerhalb des Systems in bestimmten Übermittlungsanordnungen hinzugefügt und enthält eine Angabe über ein Teilziel innerhalb der Übermittlungsanordnung. Die Nutzinformation ist im Informationsfeld untergebracht.

Zellen sind aufeinanderfolgend bestimmten Zeitabschnitten (Zeitrahmen) zugeordnet. Die Dauer eines solchen Zeitabschnittes hängt von der zugrundegelegten Taktfrequenz der Übermittlungskomponente ab. Falls keine Nutzinformation vorhanden ist, werden in einem solchen Zeitrahmen Leerzellen übertragen, d.h. Zellen ohne Nutzinformation. Zellen, die eine Nutzinformation beinhalten, werden als Nutzzellen bezeichnet.

Bei der Übertragung der Zellen zwischen Teilnehmern durchlaufen die Zellen Koppelfelder, in denen Wege durch Auswertung der Wegekennung hergestellt werden. Ein solches Koppelfeld setzt sich in der Regel aus mehreren Koppelfeldblöcken zusammen. Ein solcher Koppelfeldblock mit mehreren Zubringer- und Abnehmerleitungen besteht aus mehreren Koppelelementen. Ein Koppelelement ist mit mehreren Zubringerleitungen und einer Abnehmerleitung verbunden. In einem Koppelelement werden dabei Zellen von einer Zubringerleitung auf eine Abnehmerleitung gegeben. Bei Eintreffen von Zellen auf mehreren Zubringerleitungen während eines Zeitrahmens, die auf eine Abnehmerleitung zugreifen wollen, sind besondere Strategien zur Kopplung notwendig.

Aus der DE-A-3 833 490 ist das oben genannte Koppelelement bekannt. Hierbei werden die auf Zubringerleitungen eintreffenden Zellen in jeweils einem Kreuzungspuffer gespeichert, falls ein Zellenfilter die Zellen zum Kreuzungspuffer durchläßt. Im Zellenfilter wird die Zelle in einem Register gespeichert und von einem Vergleicher anhand der Wegekennung der Zelle und der in einem Adressenspeicher abgelegten Adresse der Abnehmerleitung geprüft, ob die Zelle der Abnehmerleitung zugeordnet ist. Falls die Zelle auf die Abnehmerleitung gegeben werden soll, wird sie im Kreuzungspuffer gespeichert. Zellen, die nicht zu dieser Abnehmerleitung gehören, werden in weiteren Koppelelementen überprüft. Die Kreuzungspuffer liefern, falls sie zur Auslesung freigegeben geben werden, die Zellen auf die Abnehmerleitung. Über die Auslesereihenfolge der Zellen entscheidet eine Entscheiderschaltung, welche die Zellen in der Reihenfolge, in der sie eingelesen worden sind, zur Auslesung freigibt. Sind gleichzeitig mehrere Zellen eingetroffen, so werden diese nach einer vorbestimmten Reihenfolge ausgelesen. Bei einem solchen Koppelelement können einige Kreuzungspuffer stärker ausgelastet sein als andere. Da jedes Kreuzungspuffer das gleiche Speichervermögen aufweist und die Größe eines Kreuzungspuffers so bestimmt wird, daß auch bei größerer Belastung keine Zellen verloren gehen, sind Kreuzungspuffer mit hohem Speichervermögen erforderlich.

Ein asynchrones Zeitvielfachübermittlungssysten ist weiter noch aus dem Dokument "IEEE JOURNAL ON SELECTED AREAS IN COMMUNICATIONS, Band SAC-5, Nr. 8, Oktober 1987, Seiten 1284-1292, New York, US; S. NOJIMA et al." bekannt. Zellen, die über Zubringerleitungen eintreffen, werden von Koppelelementen zu Abnehmerleitungen geleitet. Mit jeder Zubringerleitung ist eine Eingangsschaltung verbunden, welche die eingetroffenen Zellen parallel zu einem Eingangsbus weitergibt. Mit jedem Eingangsbus sind Kreuzungspuffer gekoppelt. Bestimmte Kreuzungspuffer sind mit einem Ausgangsbus verbunden, die Zellen zu einem Ausgangsschaltung geben. In einer solchen Ausgangsschaltung ist ein Ausgangspuffer enthalten. Auch bei diesem asynchronen Zeitübermittlungssystem sind Kreuzungspuffer mit hohem Speichervermögen erforderlich.

Der Erfindung liegt daher die Aufgabe zugrunde, ein asynchrones Zeitvielfachübermittlungssystem mit einem Koppelelement zu schaffen, bei dem ein geringerer Speicherbedarf erforderlich ist.

Diese Aufgabe wird bei einem asynchronen Zeitvielfachübermittlungssystem mit einem Koppelelement der eingangs genannten Art dadurch gelöst, daß mit den Ausgängen der Kreuzungspuffer ein Zellen an die Abnehmerleitung lieferndes Ausgangspuffer gekoppelt ist und daß die Zellen zwischen den Kreuzungspuffern und dem Ausgangspuffer mit einer gegenüber der Element-Übertragungsrate erhöhten Zwischen-Übertragungsrate übertragen werden.

Bei diesem Koppelelement werden die eintreffenden und der Abnehmerleitung zugeordneten Zellen in die jeweiligen Kreuzungspuffer mit einer bestimmten Element-Übertragungsrate eingelesen. Unter einer Element-Übertragungsrate soll die Geschwindigkeit verstanden werden, mit der die Zellen bis zum Kreuzungspuffer verarbeitet und in das Kreuzungspuffer eingelesen werden. Aus den Kreuzungspuffern werden die Zellen mit einer erhöhten Geschwindigkeit, also mit einer gegenüber der Element-Übertragungsrate vergrößerten Zwischen-Übertragungsrate ausgelesen und in einen Ausgangspuffer eingelesen. Die Reihenfolge der Auslesung aus den Kreuzungspuffern sollte dabei so erfolgen, daß die zuerst in die Kreuzungspuffer gelangten Zellen auch zuerst in den Ausgangspuffer eingelesen werden. Bei gleichzeitigem Eintreffen von Zellen kann eine bestimmte Reihenfolge des Auslesens aus den Kreuzungspuffern vorgegeben werden. Die Auslesung der Zellen aus den Ausgangspuffern erfolgt dann wieder mit der Element-Übertragungsrate. Durch die Geschwindigkeitserhöhung zwischen Kreuzungspuffern und Ausgangspuffer wird die Verweilzeit der Zellen in den Kreuzungspuffern verringert und dadurch bedingt benötigen diese ein geringeres Speichervermögen. Der Ausgangspuffer muß im Gegensatz zu den Kreuzungspuffern nicht für eine ungleichmäßige Belastung ausgelegt werden. Das Speichervermögen der Kreuzungspuffer des erfindungsgemäßen Koppelelementes muß geringer ausgelegt werden als das Speichervermögen der Kreuzungspuffer der DE-A-3 833 490, da die Verweilzeit der Zellen in den Kreuzungspuffern des erfindungsgemäßen Koppelelementes geringer ist. Dadurch bedingt verringert sich auch die Speicherkapazität aller Puffer des erfindungsgemäßen Koppelelementes gegenüber dem bekannten Koppelelement.

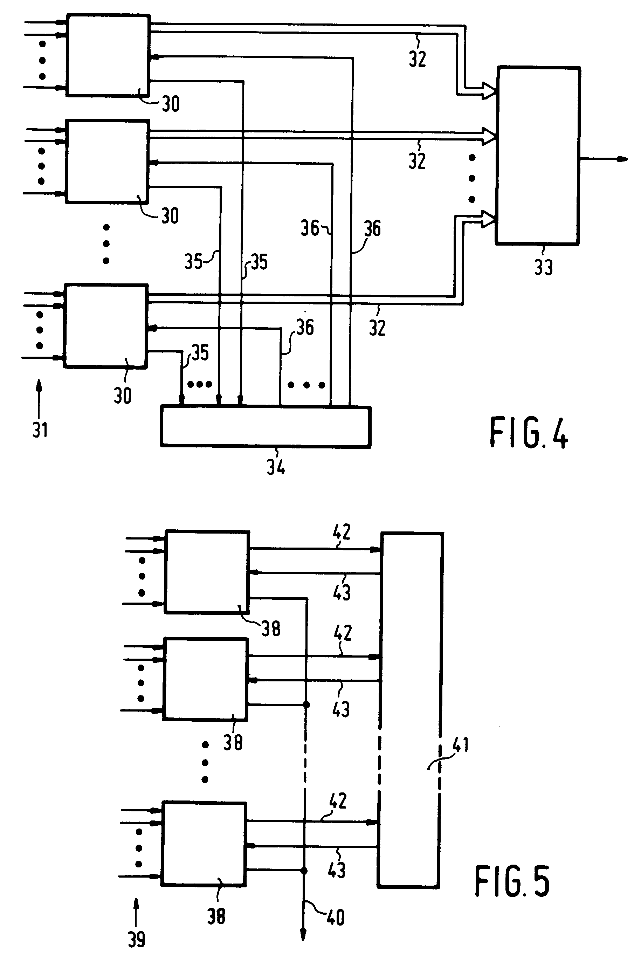

Es sei noch erwähnt, daß aus dem Aufsatz "asynchrone Zeitvielfachübermittlung für Breitbandnetze" von U. Killat, ntz, Band 40, 1987, Heft 8, Seiten 572 bis 576, Abbildung 5 ein Koppelelement bekannt ist, bei dem Eingangspuffer verwendet werden, in die jede ankommende Zelle gespeichert wird. Nachdem eine Zelle aus einem Eingangspuffer ausgelesen worden ist, wird in einem Zellenfilter überprüft, ob diese der Abnehmerleitung zugeordnet ist. Um bei einer hohen Auslastung der Zubringerleitungen die Zellen im Eingangspuffer abbauen zu können, wird vorgeschlagen, eine Geschwindigkeitserhöhung im Koppelfeld vorzunehmen. Dazu sind dann Puffer in den Ausgangsleitungen erforderlich. Bei diesem Koppelfeld wird, wenn Zellen auf zwei Zubringerleitungen während eines Zeitrahmens eintreffen und auf dieselbe Abnehmerleitung gegeben werden sollen, eine Zelle an der Ausgabe gehindert (Speicherung der Zelle in einem Eingangspuffer). Wenn eine weitere Zelle im nächsten Zeitrahmen, die auf der Zubringerleitung geliefert wird, auf der vorher die gespeicherte Zelle geliefert worden ist, auf eine andere Abnehmerleitung gegeben werden soll, kann diese nicht ausgegeben werden, bevor die gespeicherte Zelle gesendet worden ist. Die sich hierdurch ergebenden Behinderungen bedeuten Zeitverzögerungen, die bei dem erfindungsgemäßen Koppelelement nicht entstehen können. Die Geschwindigkeitserhöhung bei diesem Koppelfeld dient also zur Verhinderung von Blockierungen.

Eine Erhöhung der Zwischen-Übertragungsrate gegenüber der Element-Übertragungsrate kann bei einer seriellen Übertragung der Bits einer Zelle durch eine Erhöhung der Taktgeschwindigkeit realisiert werden. Eine solche Schaltungsmaßnahme ist jedoch momentan technisch nicht machbar, da die erforderlichen Geschwindigkeiten nicht mit der vorhandenen integrierten Schaltungstechnik realisierbar sind. Eine einfache Maßnahme läßt sich dadurch realisieren, daß die Zellen zwischen den Kreuzungspuffern und dem Ausgangspuffer wenigstens teilweise parallel übertragen werden. Unter einer vollständigen parallelen Übertragung einer Zelle wäre die gleichzeitige Übertragung aller Bits einer Zelle zu verstehen. Bei einer teilweisen parallelen Übertragung der Zelle werden einige Bits der Zelle innerhalb eines Zeitrahmens und die weiteren Bits der Zelle in den folgenden Zeitrahmen übertragen. Beispielsweise werden bei einer Zelle mit 100 Bits und einer fünffachen Geschwindigkeitserhöhung jeweils 5 Bits innerhalb eines Zeitrahmens zum Ausgangspuffer übertragen.

Puffer weisen jeweils einen Parallel- und Seriell-Eingang und einen Parallel- und Seriell-Ausgang auf. In den Seriell-Eingang bzw. Seriell-Ausgang werden Daten seriell eingelesen bzw. ausgelesen, und in den Parallel-Eingang bzw. Parallel-Ausgang werden Daten parallel eingelesen bzw. ausgelesen. Um die Zellen wenigstens teilweise parallel übertragen zu können, ist daher vorgesehen, daß wenigstens einige Parallel-Ausgänge der Kreuzungspuffer mit den entsprechenden Parallel-Eingängen des Ausgangspuffers gekoppelt sind. Falls alle Bits einer Zelle auf einmal ausgelesen werden sollen, müssen alle Parallel-Ausgänge eines Kreuzungspuffers mit den entsprechenden Parallel-Eingängen des Ausgangspuffers gekoppelt sein. Bei einer teilweisen parallelen Übertragung sind jedoch nur einige Parallel-Ausgänge der Kreuzungspuffer mit den entsprechenden Parallel-Eingängen der Ausgangspuffer gekoppelt. Da in der Regel die Puffer nach einem Schieberegisterprinzip arbeiten, sind, um eine einfache Steuerung des Übertragungsvorgangs zu realisieren, die Verbindungsleitungen zwischen den Parallel-Ausgängen der Kreuzungspuffer und den Parallel-Eingängen der Ausgangspuffer symmetrisch verteilt. Beispielsweise ist bei einer Zelle mit einer Länge von 100 Bit und einer 10-fachen Geschwindigkeitserhöhung jeder 10te Parallel-Ausgang eines Kreuzungspuffers bzw. Parallel-Eingang des Ausgangspuffers mit einer Verbindungsleitung gekoppelt. Zwischen den an einer Verbindungsleitung angeschlossenen Parallel-Eingängen bzw. -Ausgängen liegen also 9 Eingänge bzw. Ausgänge ohne Anschluß einer Verbindungsleitung. Während zehn aufeinanderfolgender Zeitrahmen werden in diesem Beispiel die Bits der Zelle über die Verbindungsleitungen übertragen.

Zur Steuerung des Auslesevorgangs aus den Kreuzungspuffern ist eine Zuweisungsschaltung vorgesehen, der jedes Zellenfilter die Ankunft einer Zelle für die Abnehmerleitung meldet und welche den Auslesungsvorgang der Kreuzungspuffer so steuert, daß die Zellen gemäß ihrem zeitlichen Eintreffen und bei gleichzeitigem Eintreffen gemäß einer vorbestimmten Reihenfolge ausgelesen werden. Für das erfindungsgemäße Koppelelement kann beispielsweise die in der DE-A-3 833 490 beschriebene Zuweisungsschaltung verwendet werden.

Ob eine Zelle in ein Kreuzungspuffer eingelesen wird, überprüft jeweils ein jeder Zubringerleitung zugeordnetes Zellenfilter. Ein solches Zellenfilter enthält ein Register, in welches eine auf einer Zubringerleitung gelieferte Zelle eingelesen wird, und des weiteren einen Vergleicher, der anhand der Wegekennung der eingetroffenen Zelle und der aus einem Speicher gelieferten Information prüft, ob die Zelle der Abnehmerleitung zugeordnet ist. Falls eine Zuordnung vorliegt, gibt der Vergleicher das mit dem Register gekoppelte Kreuzungspuffer zur Einlesung frei.

Das Koppelelement sollte möglichst so dimensioniert sein, daß die Eingangspuffer so klein wie möglich ausgelegt werden. Um diese Forderung zu erfüllen, ist der Faktor, um den die Zwischen-Übertragungsrate gegenüber der Element-Übertragungsrate erhöht ist, sehr hoch zu wählen. Für den Fall einer parallelen Verarbeitung bedeutet dies, daß viele Verbindungen zwischen den Kreuzungspuffern und dem Ausgangspuffer bestehen. Da der Platzbedarf auf einer integrierten Schaltung aber begrenzt ist, ist auch die Zahl der Leitungen begrenzt. Es hat sich daher herausgestellt, daß der optimale Faktor, um den die Zwischen-Übertragungsrate gegenüber der Element-Übertragungsrate erhöht ist, bei drei liegt. In diesem Fall können die Kreuzungspuffer jeweils so ausgelegt werden, daß sie maximal 3 Zellen speichern können.

Koppelelemente werden in der Regel für eine bestimmte Anzahl von Zubringerleitungen gebaut. Um z.B. Vermittlungsstellen mit einer größeren Anzahl von Zubringerleitungen realisieren zu wollen, ist es nötig, mehrere Koppelelemente parallelzuschalten, die auf eine Abnehmerleitung führen. Hierzu dient eine Koppelstufe für ein asynchrones Zeitvielfachübermittlungssystem mit mehreren Koppelelementen, die jeweils von Zubringerleitungen gelieferte, für eine Abnehmerleitung bestimmte Zellen übertragen und die mit jeweils einer Zubringerleitung gekoppelte Zellenfilter enthalten, welche bei Zuordnung der in den Zellen enthaltenen Wegekennung zu der Abnehmerleitung die Zellen zur Speicherung in mit jedem Zellenfilter gekoppelte Kreuzungspuffer durchlassen, welche die Zellen mit einer vorgegebenen Element-Übertragungsrate erhalten. Erfindungsgemäß ist jeweils mit den Ausgängen der Kreuzungspuffer ein Zellen an die Abnehmerleitung lieferndes Ausgangspuffer gekoppelt, welches die Zellen von den Kreuzungspuffern mit einer gegenüber der Element-Übertragungsrate erhöhten Zwischen-Übertragungsrate empfangen, sind die Ausgangspuffer der Koppelelemente jeweils mit einem Stufenpuffer gekoppelt und werden die von den Koppelelementen gelieferten Zellen mit einer gegenüber der Element-Übertragungsrate erhöhten Stufen-Übertragungsrate zu dem Stufenpuffer übertragen. Durch die Erhöhung der Stufen-Übertragungsrate gegenüber der Element-Übertragungsrate ergeben sich in den Kreuzungs- bzw. Ausgangspuffern der Koppelelemente praktisch keine Verweilzeiten der Zellen, wodurch auch das Speichervermögen der Puffer insgesamt niedriger zu wählen ist, als bei einer einfachen Parallelschaltung von Koppelelementen. Für eine solche Koppelstufe ist es noch erforderlich, daß eine Stufenzuweisungsschaltung den Auslesevorgang der Zellen aus den Koppelelementen zum Stufenpuffer steuert. Eine solche Zuweisungsschaltung könnte wie die oben für ein Koppelelement angegebene Zuweisungsschaltung aufgebaut sein.

Bei einer anderen Möglichkeit, mehrere Koppelelemente zu einer Koppelstufe zusammenzufassen, ist vorgesehen, daß die Ausgangspuffer der Koppelelemente jeweils mit einer Stufen-Abnehmerleitung verbunden sind. In diesem Fall wird der Auslesevorgang aus den Ausgangspuffern von einer weiteren Stufenzuweisungsschaltung gesteuert.

Die Erfindung bezieht sich auch auf ein Koppelfeld für ein asynchrones Zeitvielfachübermittlungssystem, das von Zubringerleitungen gelieferte, für eine Abnehmerleitung bestimmte Zellen überträgt und das mit jeweils einer Zubringerleitung gekoppelte Zellenfilter enthält, welche bei Zuordnung der in den Zellen enthaltenen Wegekennung zu der Abnehmerleitung die Zellen zur Speicherung in mit jedem Zellenfilter gekoppelte Kreuzungspuffer durchlassen, welche die Zellen mit einer vorgegebenen Element-Übertragungsrate erhalten. Erfindungsgemäß ist mit den Ausgängen der Kreuzungspuffer ein Zellen an die Abnehmerleitung lieferndes Ausgangspuffer gekoppelt ist und werden die Zellen zwischen den Kreuzungspuffern und dem Ausgangspuffer mit einer gegenüber der Element-Übertragungsrate erhöhten Zwischen-Übertragungsrate übertragen werden.

Ausführungsbeispiele der Erfindung werden nachstehend anhand der Zeichnungen näher erläutert.

Es zeigen:
Fig. 1 ein Blockschaltbild eines asynchronen Zeitvielfachübermittlungssystems,
Fig. 2 ein vereinfacht dargestelltes Koppelelement,
Fig. 3 eine Schaltungsanordnung zur Erläuterung der Parallelverarbeitung der Zellen zwischen Kreuzungspuffern und einem Ausgangspuffer und
Fig. 4 und 5 Koppelstufen, die sich aus mehreren Koppelelementen zusammensetzen.

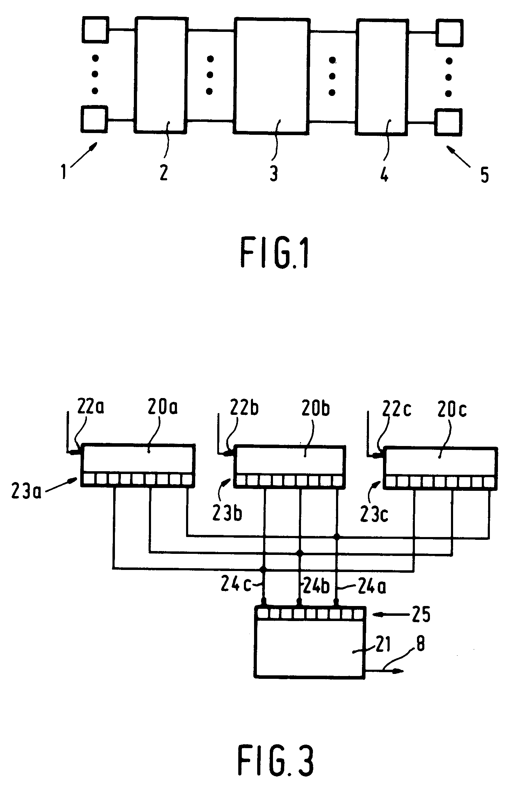

Mit dem in Fig. 1 dargestellten Blockschaltbild läßt sich das Prinzip eines asynchronen Zeitvielfachübermittlungssystems erläutern. Die Signale eines Endgerätes, zum Beispiel Fernsprech-, Bild- oder Tonsignale, werden in einem Paketisierer segmentiert und mit einem Kopffeld, in dem eine Wegekennung vorhanden ist, versehen. Die Wegekennung beinhaltet die Angabe über das Ziel der Signale. Ein solches Endgerät und der Paketisierer bilden eine Teilnehmerendeinrichtung 1. Die Daten eines solchen Endgerätes werden dabei innerhalb aufeinanderfolgender Zeitintervalle (Zeitrahmen) in Form von Zellen übertragen. Die Dauer eines solchen Zeitrahmens hängt dabei von der zugrundegelegten Taktfrequenz einer Übermittlungskomponente ab.

Solche Zellen bestehen aus dem schon oben erwähnten Kopffeld und der Nutzinformation. Sollen innerhalb eines Zeitrahmens keine Daten übertragen werden, so wird eine Leerzelle gebildet, d.h. eine Zelle, in der im Kopffeld angegeben ist, daß keine weitere Information folgt. Solche Leerzellen dienen zur Synchronisation des Systems. Die Zellen, die eine Nutzinformation tragen, werden als Nutzzellen bezeichnet.

In dem in Fig. 1 dargestellten Blockschaltbild werden die Daten zum Beispiel von 64 Teilnehmerendeinrichtungen 1 über 64 Leitungen mit jeweils einer Kapazität von 150 Mbit/s zu einer Anschlußgruppe 2 übertragen. In der Anschlußgruppe 2 werden die Daten zusammengefaßt und über eine geringere Anzahl von Leitungen mit einer höheren Kapazität übertragen. Beispielsweise können diese Daten über 16 Leitungen mit einer Kapazität von jeweils 600 Mbit/s geführt werden. In einem nachfolgenden Koppelfeld 3, das sich aus mehreren Koppelfeldblöcken und diese aus mehreren Koppelelementen zusammensetzt, findet durch Auswertung der Wegekennung eine Vermittlung der Daten statt, indem sie auf eine bestimmte Abnehmerleitung gegeben werden. Ein Koppelelement besteht hierbei aus einer Schaltungsanordnung, die an mehrere Zubringerleitungen und eine Abnehmerleitung angeschlossen ist. Die Schaltungsanordnung bzw. das Koppelelement können Daten, die auf die mit dem Koppelelement verbundene Abnehmerleitung weitergeleitet werden sollen, ermitteln und die erforderlichen Wege innerhalb der Schaltungsanordnung dafür schaffen. Das Koppelfeld 3 ist wieder mit mehreren Leitungen, zum Beispiel 16 Leitungen mit einer Kapazität von 600 Mbit/s, mit einer Anschlußgruppe 4 verbunden. Die Anschlußgruppe 4 leitet die empfangenen Daten über Leitungen an Teilnehmerendeinrichtungen 5 weiter. Beispielsweise sind hierbei 64 Leitungen mit jeweils einer Kapazität von 150 Mbit/s vorgesehen. Ein solches System verarbeitet die Daten bidirektional, d.h. diese Daten werden außerdem noch von der Teilnehmerendeinrichtung 5 auf die Teilnehmerendeinrichtung 1 übertragen.

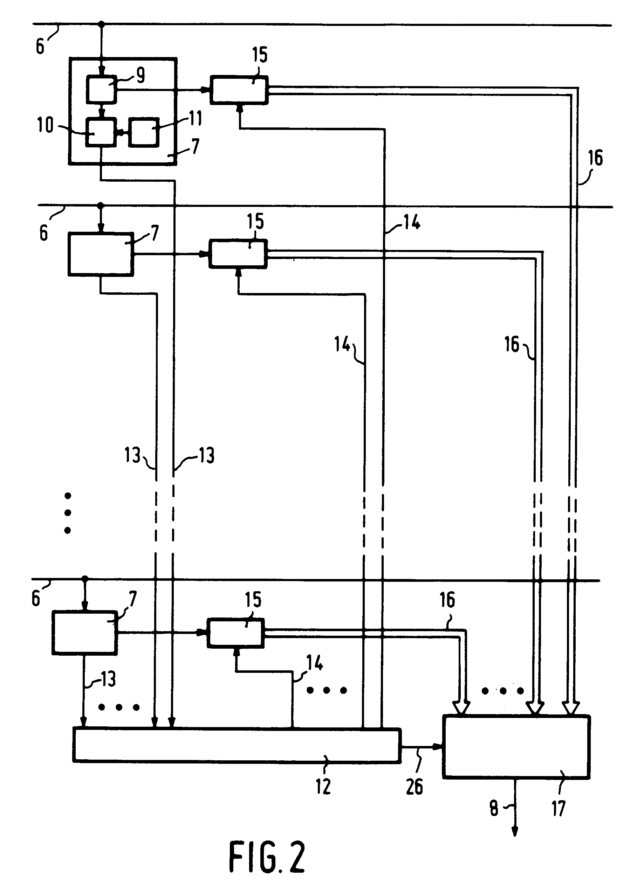

In Fig. 2 ist ein Koppelelement, das Teil eines Koppelfeldes ist, dargestellt. Das Koppelelement ist mit mehreren Zubringerleitungen 6 verbunden. An jede Zubringerleitung 6 ist ein Zellenfilter 7 angeschlossen, welches überprüft, ob die eingetroffene Zelle auf eine Abnehmerleitung 8 gegeben werden soll. Jedes Zellenfilter 7 umfaßt ein Register 9, einen Vergleicher 10 und einen Speicher 11. Jedes Register 9 ist mit einer Zubringerleitung 6 verbunden. Dem Vergleicher 10 wird über eine Leitung die Wegekennung der im Register 9 abgespeicherten Zelle und über eine weitere Leitung eine Information vom Speicher 11 zugeführt. Der Vergleicher 10 ermittelt anhand der Wegekennung und der Information aus dem Speicher 11, ob die Wegekennung der Abnehmerleitung 8 zugeordnet ist. Falls die im Register 9 gespeicherte Zelle auf die Abnehmerleitung 8 geleitet werden soll, gibt der Vergleicher ein Signal an eine Zuweisungsschaltung 12 über eine Leitung 13. Die Zuweisungsschaltung 12 gibt daraufhin über Leitungen 14 ein mit dem Register 9 verbundenes Kreuzungspuffer 15 zur Einlesung der im Register 9 gespeicherten Zelle frei.

Die Zuweisungsschaltung 12 speichert die Reihenfolge, in der Zellen aus Zellenfiltern 7 in die jeweiligen Kreuzungspuffer 15 eingelesen worden sind und gibt diese in der gleichen zeitlichen Reihenfolge über Verbindungsleitungen 16 zu einem Ausgangspuffer 17. Falls Zellen gleichzeitig in verschiedene Kreuzungspuffer 15 eingelesen worden sind, werden die Zellen in einer bestimmten zeitlichen Reihenfolge aus den Kreuzungspuffern 15 ausgelesen. Eine solche Zuweisungsschaltung ist beispielsweise aus der DE-A-3 833 490 bekannt. Der Auslesebefehl für die Kreuzungspuffer 15 wird ebenfalls über die Leitungen 14 von der Zuweisungsschaltung 12 gegeben. Aus dem Ausgangspuffer 17 wird jeweils eine Zelle pro Zeitrahmen auf die Abnehmerleitung 8 gegeben.

Die Geschwindigkeit, mit der die Zellen dem Zellenfilter 7 geliefert und bis zur Einlesung in das Kreuzungspuffer 15 verarbeitet werden, entspricht einer bestimmten Element-Übertragungsrate. Die Übertragungsgeschwindigkeit der Zellen hängt also bis zum Kreuzungspuffer 15 von einer bestimmten Taktfrequenz ab. Über die Verbindungsleitungen 16 werden die Zellen jedoch mit einer erhöhten Geschwindigkeit, d.h. mit einer erhöhten Zwischen-Übertragungsrate, von den Kreuzungspuffern 15 auf den Ausgangspuffer 17 übertragen. Eine solche Erhöhung der Geschwindigkeit kann durch eine Erhöhung der Taktfrequenz erfolgen. Eine einfachere Möglichkeit ergibt sich aber, indem die einzelnen Bits der Zellen wenigstens teilweise parallel übertragen werden, d.h., daß eine bestimmte Anzahl von Bits der Zelle gleichzeitig über die Verbindungsleitungen 16 gegeben werden.

Zur Verdeutlichung der parallelen Verarbeitung der Zellen über die Verbindungsleitungen 16 ist in Fig. 3 ein vereinfachtes Beispiel mit drei Kreuzungspuffern 20a bis c und einem Ausgangspuffer 21 dargestellt. Für dieses Beispiel soll die Zellenlänge 9 Bits betragen. Die Kreuzungspuffer 20a bis c weisen jeweils einen seriellen Eingang 22a bis c auf, in den eine Zelle seriell eingelesen wird. Des weiteren enthalten die Kreuzungspuffer 20a bis c jeweils einen parallelen Ausgang, aus dem die Zellen parallel ausgelesen werden können. In der Zeichnung sind symbolisch Ausgangs-Speicherzellen 23a bis c für die Kreuzungspuffer 20a bis c dargestellt, aus denen die Bits einer Zelle parallel ausgelesen werden können. Die erste Speicherzelle jeder Ausgangs-Speicherzellen 23a bis c ist mit einer Verbindungsleitung 24a, die vierte Speicherzelle jeder Ausgangs-Speicherzellen 23a bis c mit einer Verbindungsleitung 24b und die siebte Speicherzelle jeder Ausgangs-Speicherzellen 23a bis c mit einer Verbindungsleitung 24c verbunden. Über die Verbindungsleitung 24a werden das erste, das zweite und dritte Bit der Zelle, über die Verbindungsleitung 24b das vierte, fünfte und sechste Bit der Zelle und über die Verbindungsleitung 24c das siebte, achte und neunte Bit der Zelle während aufeinanderfolgender Zeitrahmen übertragen. Bei jedem Zeitrahmen werden die Bits einer Zelle über die Speicherzellen zu den Verbindungsleitungen verschoben (Schieberegisterprinzip).

Auch für den Ausgangspuffer 21 sind in der Zeichnung symbolisch Eingangs-Speicherzellen 25 dargestellt. Diese Eingangs-Speicherzellen 25 des Ausgangspuffers 21 bestehen ebenfalls aus 9 Speicherzellen. Die Verbindungsleitung 24a ist dabei mit der dritten Speicherzelle, die Leitung 24b mit der sechsten und die Verbindungsleitung 24c mit der neunten Speicherzelle verbunden. Durch diese teilweise parallele Verarbeitung der Zellen zwischen den Kreuzungspuffern 20a bis c und dem Ausgangspuffer 21 wird eine dreifache Geschwindigkeitserhöhung erreicht, da auf den Verbindungsleitungen 24a bis c jeweils 3 Bit parallel zum Ausgangspuffer 21 verschoben werden. Aus dem Ausgangspuffer 21 werden die Daten seriell auf die Abnehmerleitung 8 gegeben.

Als optimaler Faktor für die Geschwindigkeitserhöhung hat sich der Faktor 3 herausgestellt. Die Zwischen-Übertragungsrate sollte also gegenüber der Element-Übertragungsrate um den Faktor 3 erhöht sein. In diesem Fall kann die Anzahl der zu speichernden Zellen in einem Kreuzungspuffer 15 auf maximal drei begrenzt sein.

Wie Fig. 2 zeigt, steuert den Auslesevorgang aus dem Ausgangspuffer 17 ebenfalls die Zuweisungsschaltung 12 über eine Steuerleitung 26. Hierbei soll pro Zeitrahmen aus dem Ausgangspuffer 17 jeweils eine Zelle auf die Abnehmerleitung 8 gegeben werden.

Es sei erwähnt, daß die in Fig. 2 dargestellten Leitungen aus Gründen der Übersichtlichkeit teilweise in Form einer Leitung gezeichnet sind, obwohl sie häufiger aus mehreren parallelen Leitungen bestehen. Auch die für die Steuerung der einzelnen digitalen Schaltungselemente erforderlichen Taktleitungen und Taktgeneratoren sind nicht dargestellt.

In Fig. 4 ist eine Koppelstufe dargestellt, die sich aus mehreren Koppelelementen gemäß der Fig. 2 zusammensetzt. Jedes Koppelelement 30 ist dabei mit mehreren Zubringerleitungen 31 verbunden. Über Leitungen 32 sind die Koppelelemente 30 jeweils mit einem Stufenpuffer 33 verbunden. Gesteuert wird der Auslesevorgang aus den Koppelelementen von einer Stufenzuweisungsschaltung 34. Über die Leitungen 32 können die Zellen, die aus den Koppelelementen 30 ausgelesen werden, ebenfalls mit einer erhöhten Geschwindigkeit, also mit einer gegenüber der Element-Übertragungsrate erhöhten Stufen-Übertragungsrate übertragen werden. Hierzu kann ebenfalls eine parallele Verarbeitung der Bits einer Zelle vorgenommen werden. Die Stufenzuweisungsschaltung 34 erfährt dabei über Leitungen 35, wann Zellen von den Koppelelementen 30 ausgesendet werden sollen, und steuert diesen Auslesevorgang über Leitungen 36. Hierbei werden zuerst die Daten zum Stufenpuffer 33 transportiert, die auch zuerst in einem Ausgangspuffer eines Koppelelementes 30 eingetroffen sind. Eine solche Stufenzuweisungsschaltung 34 kann ebenfalls wie die Zuweisungsschaltung eines Koppelelementes 30 aufgebaut sein.

In Fig. 5 ist eine weitere Koppelstufe dargestellt, die sich aus mehreren Koppelelementen gemäß der Fig. 2 zusammensetzt. Jedes Koppelelement 38 ist dabei mit mehreren Zubringerleitungen 39 verbunden. Die Ausgangspuffer jedes Koppelelementes sind mit einer Stufen-Abnehmerleitung 40 verbunden. Der Auslesevorgang aus den Koppelelementen 38 wird von einer weiteren Stufenzuweisungsschaltung 41 gesteuert. Dazu ist vorgesehen, daß der weiteren Stufenzuweisungsschaltung 41 Informationen über jeweils eine Verbindungsleitung 42 zwischen einem Koppelelement 38 und der weiteren Stufenzuweisungsschaltung 41 geliefert werden. Die weitere Stufenzuweisungsschaltung 41 steuert die Koppelelemente jeweils über eine Steuerleitung 43. Diese weitere Stufenzuweisungsschaltung 41 kann ebenfalls wie die Zuweisungsschaltung eines Koppelelementes 10 aufgebaut sein.

## Patentansprüche

1. Asynchrones Zeitvielfachübermittlungssystem mit einem Koppelelement,
- das von Zubringerleitungen (6) gelieferte, für eine Abnehmerleitung (8) bestimmte Zellen überträgt und
- das mit jeweils einer Zubringerleitung gekoppelte Zellenfilter (7) enthält, welche bei Zuordnung der in den Zellen enthaltenen Wegekennung zu der Abnehmerleitung (8) die Zellen zur Speicherung in mit jedem Zellenfilter (7) gekoppelte Kreuzungspuffer (15) durchlassen, welche die Zellen mit einer vorgegebenen Element-Übertragungsrate erhalten,
dadurch gekennzeichnet,
daß mit den Ausgängen der Kreuzungspuffer (15) ein Zellen an die Abnehmerleitung (8) lieferndes Ausgangspuffer (17) gekoppelt ist und
daß die Zellen zwischen den Kreuzungspuffern (15) und dem Ausgangspuffer (17) mit einer gegenüber der Element-Übertragungsrate erhöhten Zwischen-Übertragungsrate übertragen werden.

2. Asynchrones Zeitvielfachübermittlungssystem nach Anspruch 1,
dadurch gekennzeichnet,
daß die Zellen zwischen den Kreuzungspuffern (15) und dem Ausgangspuffer (17) wenigstens teilweise parallel übertragen werden.

3. Asynchrones Zeitvielfachübermittlungssystem nach Anspruch 2,
dadurch gekennzeichnet,
daß wenigstens einige Parallel-Ausgänge (23a bis c) der Kreuzungspuffer (15; 20a bis c) mit den entsprechenden Parallel-Eingängen (25) des Ausgangspuffers (17; 21) gekoppelt sind.

4. Asynchrones Zeitvielfachübermittlungssystem nach einem der vorhergehenden Ansprüche,
dadurch gekennzeichnet,
daß jedes Zellenfilter (7) die Ankunft einer Zelle für die Abnehmerleitung (8) einer Zuweisungsschaltung (12) meldet, welche den Auslesevorgang der Kreuzungspuffer (15) so steuert, daß die Zellen gemäß ihrem zeitlichen Eintreffen und bei gleichzeitigem Eintreffen gemäß einer vorbestimmten Reihenfolge ausgelesen werden.

5. Asynchrones Zeitvielfachübermittlungssystem nach einem der vorhergehenden Ansprüche,
dadurch gekennzeichnet,
daß ein Zellenfilter (7) ein Register (9), in welches eine auf einer Zubringerleitung gelieferte Zelle eingelesen wird, und einen Vergleicher (10) enthält, der anhand der Wegekennung der eingetroffenen Zelle und der aus einem Speicher (11) gelieferten Information prüft, ob die Zelle der Abnehmerleitung (8) zugeordnet ist, und bei einer vorliegenden Zuordnung den mit dem Register gekoppelten Kreuzungspuffer (15) zur Einlesung freigibt.

6. Asynchrones Zeitvielfachübermittlungssystem nach einem der vorhergehenden Ansprüche,
dadurch gekennzeichnet,
daß die Zwischen-Übertragungsrate gegenüber der Element-Übertragungsrate um einen dreifachen Faktor erhöht ist.

7. Koppelelement für ein asynchrones Zeitvielfachübermittlungssystem,
- das von Zubringerleitungen (6) gelieferte, für eine Abnehmerleitung (8) bestimmte Zellen überträgt und
- das mit jeweils einer Zubringerleitung gekoppelte Zellenfilter (7) enthält, welche bei Zuordnung der in den Zellen enthaltenen Wegekennung zu der Abnehmerleitung (8) die Zellen zur Speicherung in mit jedem Zellenfilter (7) gekoppelte Kreuzungspuffer (15) durchlassen, welche die Zellen mit einer vorgegebenen Element-Übertragungsrate erhalten,
dadurch gekennzeichnet,
daß mit den Ausgängen der Kreuzungspuffer (15) ein Zellen an die Abnehmerleitung (8) lieferndes Ausgangspuffer (17) gekoppelt ist und
daß die Zellen zwischen den Kreuzungspuffern (15) und dem Ausgangspuffer (17) mit einer gegenüber der Element-Übertragungsrate erhöhten Zwischen-Übertragungsrate übertragen werden.

8. Koppelstufe für ein asynchrones Zeitvielfachübermittlungssystem mit mehreren Koppelelementen (30),
- die jeweils von Zubringerleitungen (31) gelieferte, für eine Abnehmerleitung bestimmte Zellen übertragen und
- die mit jeweils einer Zubringerleitung (31) gekoppelte Zellenfilter (7) enthalten, welche bei Zuordnung der in den Zellen enthaltenen Wegekennung zu der Abnehmerleitung die Zellen zur Speicherung in mit jedem Zellenfilter (7) gekoppelte Kreuzungspuffer (15) durchlassen, welche die Zellen mit einer vorgegebenen Element-Übertragungsrate erhalten,
dadurch gekennzeichnet,
daß jeweils mit den Ausgängen der Kreuzungspuffer (15) ein Zellen an die Abnehmerleitung lieferndes Ausgangspuffer (17) gekoppelt ist, welches die Zellen von den Kreuzungspuffern (15) mit einer gegenüber der Element-Übertragungsrate erhöhten Zwischen-Übertragungsrate empfängt,
daß die Ausgangspuffer der Koppelelemente (30) jeweils mit einem Stufenpuffer (33) gekoppelt sind und
daß die von den Koppelelementen (30) gelieferten Zellen mit einer gegenüber der Element-Übertragungsrate erhöhten Stufen-Übertragungsrate zu dem Stufenpuffer (33) übertragen werden.

## Claims

1. Asynchronous time-division multiplex transmission system comprising a switching element, which element
- transmits cells supplied by auxiliary lines (6) and destined for a trunk line (8), and
- comprises cell filters (7) coupled to each of the auxiliary lines, which filters pass the cells for storage in intersection buffers (15) coupled to each cell filter (7) when the routing identification contained in the cells is allocated to the trunk line (8), which intersection buffers receive the cells at a predetermined network transmission rate,
characterized in that an output buffer (17) delivering cells to the trunk line (8) is coupled to the outputs of the intersection buffers (15) and in that the cells are transmitted between the intersection buffers (15) and the output buffer (17) at an intermediate transmission rate which is higher than the transmission rate of the switching element.

2. Asynchronous time-division multiplex transmission system as defined in Claim 1, characterized in that the cells are transmitted at least partly in parallel between the intersection buffers (15) and the output buffer (17).

3. Asynchronous time-division multiplex transmission system as defined in Claim 2, characterized in that at least some parallel outputs (23a to 23c) of the intersection buffers (15; 20a to 20c) are coupled to the associated parallel inputs (25) of the output buffer (17; 21).

4. Asynchronous time-division multiplex transmission system as defined in one of the preceding Claims, characterized in that each cell filter (7) reports the arrival of a cell for the trunk line (8) to an allocation circuit (12), which controls the reading process of the intersection buffers (15) in such a way that the cells are read out in the order in time in which they have arrived and when they have arrived simultaneously, in a predetermined order.

5. Asynchronous time-division multiplex transmission system as defined in one of the preceding Claims, characterized in that a cell filter (7) comprises a register (9) in which a cell supplied over an auxiliary line is written, and includes a comparator (10) which checks on the basis of the routing identification of the arrived cell and the information supplied by a memory (11) whether the cell is allocated to the trunk line (8), and releases the associated register of the intersection buffer (15) to be read out in case of allocation.

6. Asynchronous time-division multiplex transmission system as defined in one of the preceding Claims, characterized in that the intermediate transmission rate is increased by a factor of three relative to the element transmission rate.

7. Switching element for an asynchronous time-division multiplex transmission system, which element
- transmits cells supplied by auxiliary lines (6) and destined for a trunk line (8), and
- comprises cell filters (7) coupled to each of the auxiliary lines, which filters pass the cells for storage in intersection buffers (15) coupled to each cell filter (7) when the routing identification contained in the cells is allocated to the trunk line (8), which intersection buffers receive the cells at a predetermined network transmission rate,
characterized in that an output buffer (17) delivering cells to the trunk line (8) is coupled to the outputs of the intersection buffers (15) and in that the cells are transmitted between the intersection buffers (15) and the output buffer (17) at an intermediate transmission rate which is higher than the transmission rate of the switching element.

8. Switching stage for an asynchronous time-division multiplex transmission system comprising various switching elements (30), which elements
- transmit cells supplied by auxiliary lines (31) and destined for a trunk line, and
- comprise cell filters (7) coupled to each of the auxiliary lines (31), which filters pass the cells for storage in intersection buffers (15) coupled to each cell filter (7) when the routing identification contained in the cells is allocated to the trunk line, which intersection buffers receive the cells at a predetermined network transmission rate,
characterized in that an output buffer (17) delivering cells to the trunk line is coupled to the outputs of the intersection buffers (15) which output buffer receives the cells from the intersection buffers (15) at a higher intermediate transmission rate than the element transmission rate, in that the output buffers of the switching elements (30) are coupled each to a stage buffer (33) and in that the cells supplied by the switching elements (30) are transmitted to the output buffer (17) at a higher stage transmission rate than the element transmission rate.

## Revendications

1. Système de transmission à technique ATM avec un élément de commutation,
- qui transmet des cellules délivrées par des lignes d'amenée (6) destinées à une ligne de départ (8), et
- qui contient des filtres de cellules (7) couplés respectivement à une ligne d'amenée, lesdits filtres, lors d'une affectation de l'indicatif de trajet contenu dans les cellules à la ligne de départ (8), laissant passer les cellules pour stockage dans des mémoires tampons de croisement (15) couplées à chaque filtre de cellules (7), qui reçoivent les cellules à une vitesse de transmission élémentaire prédéterminée,
caractérisé en ce qu'une mémoire tampon de sortie (17) délivrant des cellules à la ligne de départ (8) est couplée aux sorties des mémoires tampons de croisement (15) et en ce que les cellules sont transmises entre les mémoires tampons de croisement (15) et la mémoire tampon de sortie (17) à une vitesse de transmission intermédiaire élevée par rapport à la vitesse de transmission élémentaire.

2. Système de transmission à technique ATM selon la revendication 1, caractérisé en ce que les cellules sont transmises entre les mémoires tampons de croisement (15) et la mémoire tampon de sortie (17) au moins partiellement en parallèle.

3. Système de transmission à technique ATM selon la revendication 2, caractérisé en ce qu'au moins quelques sorties parallèles (23a à 23c) des mémoires tampons de croisement (15; 20a à 20c) sont couplées aux entrées parallèles correspondantes (25) de la mémoire tampon de sortie (17; 21).

4. Système de transmission à technique ATM selon l'une quelconque des revendications précédentes, caractérisé en ce que chaque filtre de cellules (7) signale l'arrivée d'une cellule pour la ligne de départ (8) à un circuit d'affectation (12) qui commande l'opération de lecture des mémoires tampons de croisement (15), de telle sorte que les cellules soient extraites en fonction de leur arrivée dans le temps et, dans le cas d'une arrivée simultanée, selon un ordre prédéterminé.

5. Système de transmission à technique ATM selon l'une quelconque des revendications précédentes, caractérisé en ce qu'un filtre de cellules (7) contient un registre (9) dans lequel est mémorisée une cellule délivrée par une ligne d'amenée, et un comparateur (10), qui vérifie, sur la base de l'indication de trajet de la cellule arrivée et des informations délivrées par une mémoire (11) si la cellule a été affectée à la ligne de départ (8) et, lorsqu'il y a affectation, libère les mémoires tampons de croisement (15) couplées au registre pour mémorisation.

6. Système de transmission à technique ATM selon l'une quelconque des revendications précédentes, caractérisé en ce que la vitesse de transmission intermédiaire est plus élevée d'un facteur de trois par rapport à la vitesse de transmission élémentaire.

7. Elément de commutation pour un système de transmission à technique ATM, qui transmet des cellules déterminées destinées à une ligne de départ (8) et délivrées par des lignes d'amenée (6), qui contient des filtres de cellules (7) couplés respectivement à une ligne d'amenée, lesdits filtres laissant passer, lors d'une affectation de ladite indication de trajet contenue dans les cellules à la ligne de départ (8), les cellules pour mémorisation dans des mémoires tampons de croisement (15) couplées à chaque filtre de cellules (7), lesdites mémoires tampons recevant les cellules à une vitesse de transmission élémentaire prédéterminée, caractérisé en ce qu'une mémoire tampon de sortie (17) délivrant des cellules à la ligne de départ (8) est couplée aux sorties des mémoires tampons de croisement (15), et en ce que les cellules sont transmises entre les mémoires tampons de croisement (15) et la mémoire tampon de sortie (17) à une vitesse de transmission intermédiaire supérieure à la vitesse de transmission élémentaire.

8. Etage de commutation pour un système de transmission à technique ATM avec plusieurs éléments de commutation (30), qui transmettent des cellules destinées à une ligne de départ respectivement délivrées par des lignes d'amenée (31) et qui contiennent des filtres de cellules (7) couplés respectivement à une ligne d'amenée (31), lesdits filtres, lors de l'affectation de l'indicatif de trajet contenu dans les cellules à la ligne de départ, laissant passer les cellules pour mémorisation dans des mémoires tampons de traitement (15) couplées à chaque filtre de cellules (7), lesdites mémoires tampons recevant des cellules à une vitesse de transmission élémentaire prédéterminée, caractérisé en ce qu'une mémoire tampon de sortie (17) délivrant des cellules à la ligne de départ est respectivement couplée aux sorties des mémoires tampons de croisement (15), ladite mémoire recevant les cellules des mémoires tampons de croisement (15) à une vitesse de transmission intermédiaire plus élevée que la vitesse de transmission élémentaire, que les mémoires tampons de sortie des éléments de commutation (30) sont couplées respectivement à une mémoire tampon d'étage (33), que les cellules délivrées par les éléments de commutation sont transmises à une mémoire tampon d'étage et que les cellules délivrées par les éléments de commutation (30) sont transmises à la mémoire tampon d'étage (33) à une vitesse de transmission d'étage supérieure à la vitesse de transmission élémentaire.
